# EUROPÄISCHE PATENTSCHRIFT

(11) **EP 2 374 597 B1**
(45) Veröffentlichungstag und Bekanntmachung des Hinweises auf die Patenterteilung: **19.06.2013**
(21) Anmeldenummer: 11002777.8
(22) Anmeldetag: 02.04.2011
(51) Int. Cl.: B29C 45/50, B29C 45/53

(54) **Einspritzeinheit einer Spritzgiessmaschine**
Injection unit of an injection moulding machine
Unité d'injection d'une machine à mouler par injection

(30) Priorität: 09.04.2010 DE 102010014450
(43) Veröffentlichungstag der Anmeldung: 12.10.2011
(73) Patentinhaber: Wittmann Battenfeld GmbH, 2542 Kottingbrunn (AT)
(72) Erfinder: Ganz, Martin, 2380 Perchtoldsdorf (AT); Philipp-Pichler, Martin, 2540 Bad-Voeslau (AT)
(74) Vertreter: Gosdin, Michael

(56) Entgegenhaltungen:
- EP-A1- 1 000 730
- EP-A1- 1 095 753
- JP-A- 2007 030 390

## Beschreibung

Die Erfindung betrifft eine Einspritzeinheit einer Spritzgießmaschine, die ein Kolben-Zylinder-System umfasst, wobei durch eine axiale Bewegung eines Einspritzelements, insbesondere eines Kolbens oder einer Schnecke, in einem Zylinder eine dosierte, in einem Abschnitt des Zylinders hinterlegte Menge an Kunststoffschmelze über eine Einspritzdüse in ein Spritzgießwerkzeug ausgetrieben werden kann, wobei das Einspritzelement mit einem Antriebselement verbunden ist, das das Einspritzelement in eine Verschieberichtung translatorisch bewegen kann, wobei das Antriebselement mindestens einen Riemen umfasst, der über zwei beabstandete Umlenkrollen geführt ist, wobei mindestens eine der Umlenkrollen mit mindestens einem Antriebsmotor, insbesondere mit einem Servomotor, in Drehverbindung steht und wobei das Einspritzelement mittelbar oder unmittelbar mit einer Umfangsstelle des mindestens einen Riemens verbunden ist.

Eine gattungsgemäße Einspritzeinheit offenbart die JP 2007 030 390 A und die EP 1 000 730 A1. Eine andere Lösung zeigt die EP 1 095 753 A1.

Insbesondere im Bereich des Mikrospritzgießens, d. h. beim Spritzgießen, bei dem sehr kleine Formteile gespritzt werden, kommen Einspritzeinheiten der gattungsgemäßen Art zum Einsatz. Hierbei wird in einem Zylinderabschnitt eine Menge an Kunststoffschmelze hinterlegt und diese dann durch axiale Verschiebung eines kolbenartigen Elements in ein Spritzgießwerkzeug injiziert.

Bei vollelektrischen Spritzgießmaschinen sind Elektromotoren als Antriebselemente bekannt. Da für das genannte Einspritzelement eine lineare Verschiebebewegung (Einspritzbewegung) benötigt wird, muss die Drehbewegung des Elektromotors in die benötigte lineare Bewegung umgewandelt werden. Bekannt ist es dabei, Kugelumlaufspindeln, Rollengewindetriebe, Zahnstangen und ähnliche Elemente einzusetzen.

Insbesondere im genannten Anwendungsfall des Mikrospritzgießenes werden relativ hohe Anforderungen an die Dynamik des kolbenartigen Einspritzelements gestellt. Bei solchen hochdynamischen Spritzgießmaschinen werden Einspritzgeschwindigkeiten von über 1 m/s und Beschleunigungen über 50 m/s² erreicht bzw. benötigt. Diese Werte beanspruchen Kugelumlaufspindeln oder Zahnstangen extrem. Um die genannten Geschwindigkeits- und Beschleunigungswerte über eine hinreichende Lebensdauer der Spritzgießmaschine garantieren zu können, werden daher bei vorbekannten Lösungen die Bewegungselemente (Kugelumlaufspindeln etc.) zumeist überdimensioniert. Dies wirkt sich allerdings nachteilig auf die Massen und damit auf die Massenträgheitskräfte aus. Demzufolge müssen auch die Antriebsmotoren größer ausgelegt werden.

Der Erfindung liegt daher die **Aufgabe** zugrunde, eine Einspritzeinheit einer Spritzgießmaschine der eingangs genannten Art vorzuschlagen, mit der es möglich ist, eine hochdynamische Bewegung des Einspritzelements zu bewerkstelligen, ohne dass aufwändige und teure Konstruktionen erforderlich sind. Der Antrieb der Einspritzeinheit soll einfach und kostengünstig realisierbar sein und die gewünschten Geschwindigkeits- und Beschleunigungswerte ermöglichen, die insbesondere für das Mikrospritzgießen benötigt werden.

Die **Lösung** dieser Aufgabe durch die Erfindung ist dadurch gekennzeichnet, dass das Einspritzelement auf einer Klemm- oder Trägerplatte angeordnet ist, die an der Umfangsstelle des mindestens einen Riemens befestigt ist.

Das Einspritzelement und/oder die Klemm- bzw. Trägerplatte können dabei auf einer Linearführung geführt sein.

Eine Ausführungsform, mit der höhere Einspritzkräfte erzeugt werden können, sieht zwei - oder mehr - parallel zueinander angeordnete Riemen vor. Die beiden (bzw. die verschiedenen) parallel zueinander angeordneten Riemen können gemeinsam die Klemm- bzw. Trägerplatte tragen. Die Umlenkrollen der beiden Riemen können auf gemeinsamen Wellen bzw. Lagerzapfen angeordnet sein.

Der mindestens eine Riemen ist bevorzugt entweder als Flachriemen oder als Zahnriemen ausgebildet.

Bevorzugt ist eine einzige angetriebene Umlenkrolle pro Riemen vorhanden. In diesem Falle ist bevorzugt vorgesehen, dass die angetriebene Umlenkrolle so angeordnet ist, dass beim Bewegen des Einspritzelements in Einspritzrichtung der Teil des Riemens zwischen der Umfangsstelle und der angetriebenen Umlenkrolle auf Zug belastet wird. In diesem Falle wird zwischen der Klemm- bzw. Trägerplatte (d. h. dem angetriebener Schlitten) und der angetriebenen Riemenscheibe eine möglichst geringe Riemenlänge erzielt und so eine steife Kraftübertragung gewährleistet.

Mit der vorgeschlagenen Riemenkonstruktion kann eine hohe Dynamik des Einspritzelements erreicht werden. Darüber hinaus ist die Konstruktion relativ einfach aufgebaut und damit kostengünstig realisierbar. Die benötigten Komponenten sind Standardbauteile, so dass auch bei Reparaturen in kostengünstiger Weise Ersatz bereitgestellt werden kann.

Das Montieren und Ausrichten der zum Einsatz kommenden Bauteile erfordern im Gegensatz zu Spindeln, Kniehebeln oder Zahnstangen keine hohe Präzision. Der Riemenantrieb kann weitaus höhere Fertigung- und Montagetoleranzen ausgleichen.

Demgemäß ist ein günstiger und einfacher Antrieb für das Einspritzelement gegeben.

Von Vorteil ist auch, dass keine Schmierung erforderlich ist.

Ferner ist eine gute Absicherung gegen Überlast gegeben.

Abhängig von der benötigten Kraft auf das Einspritzelement in Einspritzrichtung können mehrere Riemen parallel geschaltet angeordnet werden.

Bevorzugt kommt das vorgeschlagene Konzept für Spritzgießmaschinen zum Einsatz, mit denen kleine und kleinste Formteile hergestellt werden (Mikrospritzgießen).

In obiger Darstellung ist stets von Riemen die Rede. Natürlich können auch gleichwirkende Übertragungselemente eingesetzt werden, z. B. Ketten.

In der Zeichnung sind Ausführungsbeispiele der Erfindung dargestellt. Es zeigen:
- Fig. 1: eine geschnittene Vorderansicht einer Plastifizier- und Einspritzeinheit einer Spritzgießmaschine zum Mikrospritzgießen,
- Fig. 2: ein Antriebselement für ein Einspritzelement in Form eines Kolbens in der Seitenansicht,
- Fig. 3: das Antriebselement gemäß Fig. 2 in der Draufsicht und
- Fig. 4: ein alternativ ausgebildetes Antriebselement mit zwei parallelen Riemen in einem Schnitt A-B gemäß Fig. 2.

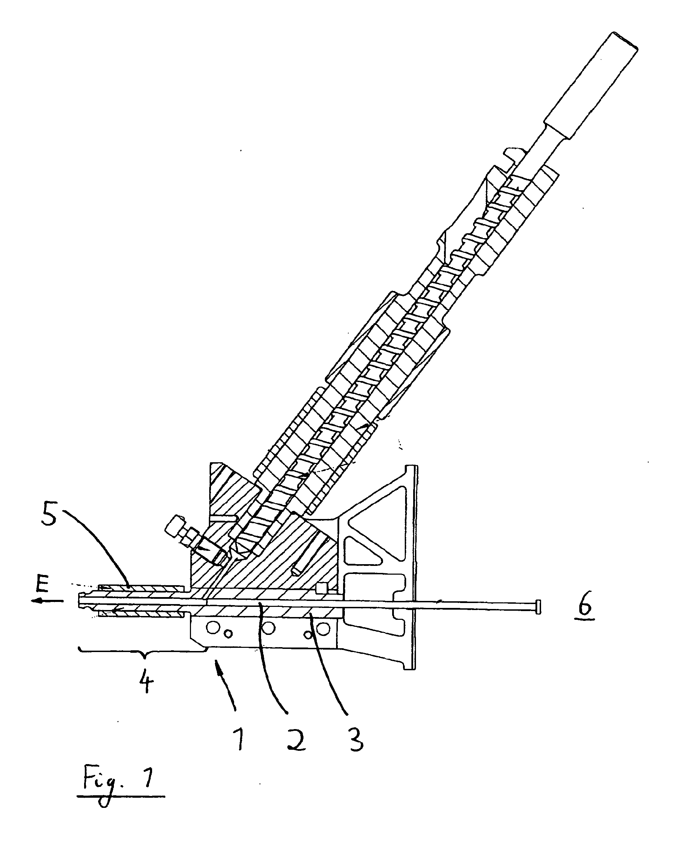

In Fig. 1 ist eine Plastifizier- und Einspritzeinheit einer Mikrospritzgießmaschine skizziert, mit der kleine und kleinste Mengen an Kunststoffschmelze plastifiziert und in ein - nicht dargestelltes - Spritzgießwerkzeug eingespritzt werden können. Hier ist eine im unteren Bereich der Plastifizier- und Einspritzeinheit angeordnete Einspritzeinheit 1 interessant, die ein Kolben-Zylinder-System 2, 3 umfasst. Bei diesem befindet sich in einem Zylinder 3 ein Einspritzelement 2 in Form eines Kolbens 2; genauso könnte es sich aber hierbei auch um eine Schnecke handeln. In einem Abschnitt 4 des Zylinders 3, der eine Einspritzdüse 5 bildet, wird von der im oberen Bereich angeordneten Plastifiziereinheit Schmelze bereitgestellt und in dem Abschnitt 4 hinterlegt. Durch Verschieben des Kolbens 2 in Einspritzrichtung E wird diese Schmelze in das Spritzgießwerkzeug injiziert.

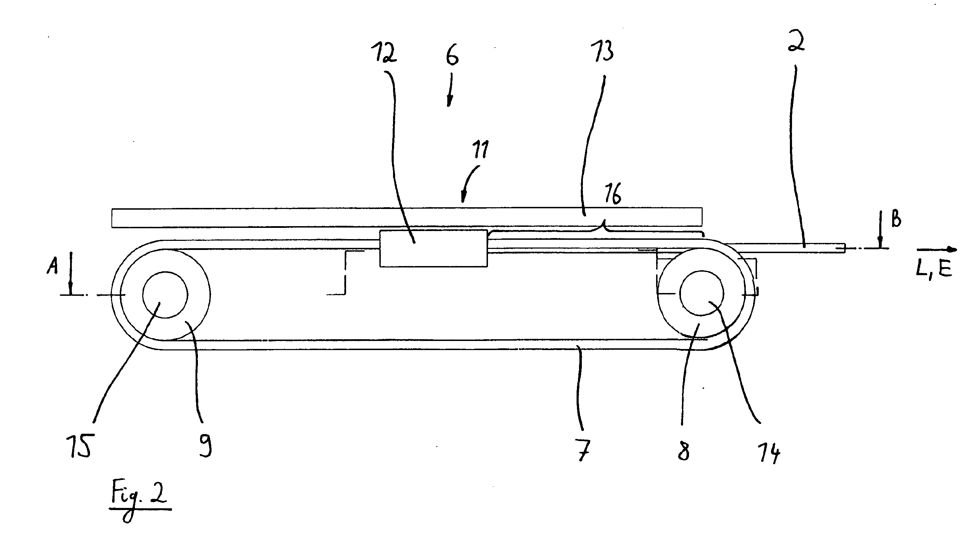

Hierfür dient ein Antriebselement 6, das in Fig. 1 nur angedeutet ist und das in den Figuren 2 bis 4 näher dargestellt ist.

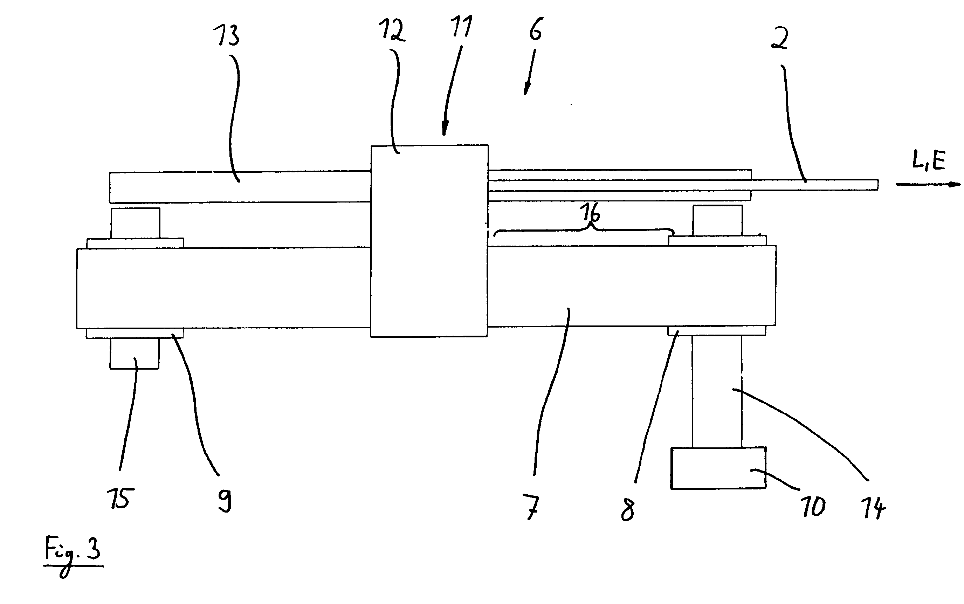

Das in Fig. 2 in der Seitenansicht und in Fig. 3 in der Draufsicht dargestellte Antriebselement 6 sieht zunächst eine Linearführung 13 vor, die den Kolben 2 so lagert, dass er in eine Verschieberichtung L verfahrbar ist. Zum Einspritzen muss der Kolben 2 in die nach rechts gerichtete Einspritzrichtung E verfahren werden. Dies muss mit hoher Dynamik erfolgen.

Um dies zu erreichen, ist vorgesehen, dass der Kolben 2 auf einer Klemm- bzw. Trägerplatte 12 befestigt ist. Die Klemm- bzw. Trägerplatte 12 wiederum ist an einer Umfangsstelle 11 eines Riemens 7 befestigt. Der Riemen 7 ist mittels zweier Umlenkrollen 8 und 9 gelagert. Dabei ist die Umlenkrolle 8 auf einer Welle 14 gelagert, die von einem Servomotor 10 gedreht werden kann. Die Umlenkrolle 9 ist indes auf einer nicht angetriebenen Welle 15 gelagert. Die Welle 15 kann als Spannwelle ausgeführt und zum Spannen des Riemens 7 in Verschieberichtung L einstellbar sein.

Bei der Bewegung der Klemm- bzw. Trägerplatte 12 und damit des Kolbens 2 in Einspritzrichtung E liegt ein zugbelasteter Teil 16 des Riemens 7 vor, der relativ kurz ausgebildet ist. Damit ist eine relativ steife Anbindung des Kolbens 2 an die Drehbewegung der angetriebenen Umlenkrolle 7 gegeben.

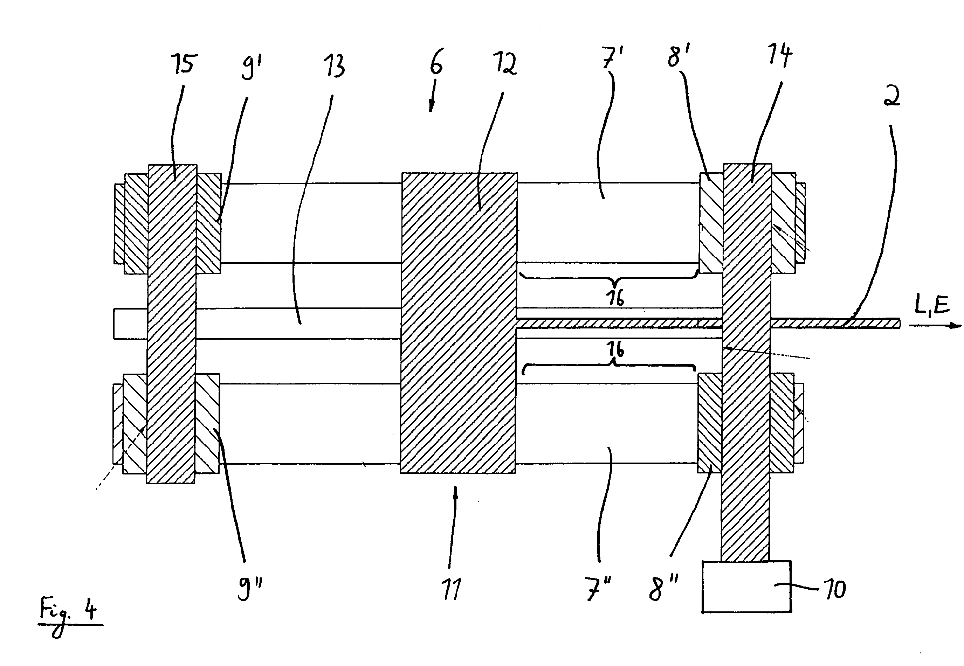

In Fig. 4 ist eine alternative Lösung skizziert. Hier ist vorgesehen, dass zwei Riemen 7', 7" parallel zueinander angeordnet sind. Die beiden Riemen 7', 7" werden auf jeweiligen Umlenkrollen 8' und 8" bzw. 9' und 9" gelagert. Für beide Umlenkrollen 8', 8" ist nur eine einzige Welle 14 vorgesehen, die wiederum drehangetrieben ist. Die beiden Umlenkrollen 9', 9" sind indes auf einer gemeinsamen Welle 15 gelagert, die nicht angetrieben ist.

Die Linearführung 13 ist zwischen den beiden Riemen 7', 7" angeordnet. An der Umfangsstelle 11 ist wiederum eine Klemm- bzw. Trägerplatte 12 an beiden Riemen 7', 7" befestigt. An der Klemm- bzw. Trägerplatte 12 ist der Kolben 2 fixiert. Durch die insofern symmetrische Anordnung des Kolbens 2 zwischen den beiden Riemen 7', 7" ergibt sich eine vorteilhafte unverkantete Führung des Kolbens 2 bei seiner Bewegung in Einspritzrichtung E.

Die Riemen 7, 7', 7" können als Flachriemen oder als Zahnriemen ausgeführt sein, welche fachmännisch ausgelegt werden. Genauso können auch Ketten statt Riemen vorgesehen werden. Insoweit fällt auch eine Kette unter den hier verwendeten Begriff des Riemens.

Mit der vorgeschlagenen Anordnung kann eine hochdynamische Bewegung des Kolbens 2 zwischen seinen axialen Endpositionen erreicht werden. Dabei kommen einfache und preiswerte Bauteile zum Einsatz, so dass die vorgeschlagene Einspritzeinheit kostengünstig gefertigt und montiert werden kann.

Möglich ist es auch, beide Wellen bzw. Lagerzapfen 14 und 15 und damit beide Umlenkrollen 8, 9 mit je einem Antriebsmotor 10 anzutreiben. Der Vorteil einer solchen Lösung ist, dass die Motoren kleiner bauen können und insgesamt eine höhere Dynamik des Antriebselements erreicht werden kann.

### Bezugszeichenliste:

- 1: Einspritzeinheit
- 2, 3: Kolben-Zylinder-System
- 2: Einspritzelement (Kolben/Schnecke)
- 3: Zylinder
- 4: Abschnitt des Zylinders
- 5: Einspritzdüse
- 6: Antriebselement
- 7, 7', 7": Riemen
- 8, 8', 8": Umlenkrolle
- 9, 9', 9": Umlenkrolle
- 10: Antriebsmotor (Servomotor)
- 11: Umfangsstelle
- 12: Klemmplatte / Trägerplatte
- 13: Linearführung
- 14: Welle / Lagerzapfen
- 15: Welle / Lagerzapfen
- 16: zugbelasteter Teil des Riemens
- L: Verschieberichtung
- E: Einspritzrichtung

## Patentansprüche

1. Einspritzeinheit (1) einer Spritzgießmaschine, die ein Kolben-Zylinder-System (2, 3) umfasst, wobei durch eine axiale Bewegung eines Einspritzelements (2), insbesondere eines Kolbens (2) oder einer Schnecke, in einem Zylinder (3) eine dosierte, in einem Abschnitt (4) des Zylinders (3) hinterlegte Menge an Kunststoffschmelze über eine Einspritzdüse (5) in ein Spritzgießwerkzeug ausgetrieben werden kann, wobei das Einspritzelement (2) mit einem Antriebselement (6) verbunden ist, das das Einspritzelement (2) in eine Verschieberichtung (L) translatorisch bewegen kann, wobei das Antriebselement (6) mindestens einen Riemen (7) umfasst, der über zwei beabstandete Umlenkrollen (8, 9) geführt ist, wobei mindestens eine der Umlenkrollen (8) mit mindestens einem Antriebsmotor (10), insbesondere mit einem Servomotor, in Drehverbindung steht und wobei das Einspritzelement (2) mittelbar oder unmittelbar mit einer Umfangsstelle (11) des mindestens einen Riemens (7) verbunden ist,
**dadurch gekennzeichnet, dass**
das Einspritzelement (2) auf einer Klemm- oder Trägerplatte (12) angeordnet ist, die an der Umfangsstelle (11) des mindestens einen Riemens (7) befestigt ist.

2. Einspritzeinheit nach Anspruch 1, **dadurch gekennzeichnet, dass** der Riemen (7) als ringförmig geschlossenes Element ausgebildet ist.

3. Einspritzeinheit nach Anspruch 2, **dadurch gekennzeichnet, dass** der Ringschluss des Riemens (7) über die Klemm- oder Trägerplatte (12) erfolgt, indem die Enden des Riemens (7) an der Klemm- oder Trägerplatte (12) befestigt sind.

4. Einspritzeinheit nach einem der Ansprüche 1 bis 3, **dadurch gekennzeichnet, dass** das Einspritzelement (2) und/oder die Klemm- oder Trägerplatte (12) auf mindestens einer Linearführung (13) geführt ist.

5. Einspritzeinheit nach einem der Ansprüche 1 bis 4, **dadurch gekennzeichnet, dass** mindestens zwei parallel zueinander angeordnete Riemen (7', 7") vorhanden sind.

6. Einspritzeinheit nach Anspruch 5, **dadurch gekennzeichnet, dass** die mindestens zwei parallel zueinander angeordneten Riemen (7', 7") gemeinsam die Klemm- oder Trägerplatte (12) tragen.

7. Einspritzeinheit nach Anspruch 5 oder 6, **dadurch gekennzeichnet, dass** die Umlenkrollen (8', 8", 9', 9") der mindestens zwei Riemen (7', 7") auf gemeinsamen Wellen bzw. Lagerzapfen (14, 15) angeordnet sind.

8. Einspritzeinheit nach einem der Ansprüche 1 bis 7, **dadurch gekennzeichnet, dass** der mindestens eine Riemen (7) als Flachriemen ausgebildet ist.

9. Einspritzeinheit nach einem der Ansprüche 1 bis 7, **dadurch gekennzeichnet, dass** der mindestens eine Riemen (7) als Zahnriemen ausgebildet ist.

10. Einspritzeinheit nach einem der Ansprüche 1 bis 9, **dadurch gekennzeichnet, dass** eine einzige angetriebene Umlenkrolle (8) pro Riemen (7) vorhanden ist.

11. Einspritzeinheit nach Anspruch 10, **dadurch gekennzeichnet, dass** die angetriebene Umlenkrolle (8) so angeordnet ist, dass beim Bewegen des Einspritzelement (2) in Einspritzrichtung (E) der Teil (16) des Riemens (7) zwischen der Umfangsstelle (11) und der angetriebenen Umlenkrolle (8) auf Zug belastet wird.

## Claims

1. Injection unit (1) of an injection moulding machine, which comprises a piston-cylinder-system (2, 3), wherein a metered amount of plastic melt, which is deposited in a section (4) of a cylinder (3), can be injected via an injection nozzle (5) into an injection moulding tool by an axial movement of an injection element (2), especially of a piston (2) or of a screw, in the cylinder (3), wherein the injection element (2) is connected with a drive element (6) which can move the injection element (2) translational in a direction of displacement (L), wherein the drive element (6) comprises at least one belt (7) which is guided over two distanced deflexion pulleys (8, 9), wherein at least one deflexion pulley (8) is rotationally coupled with at least one drive motor (10), especially with a servo motor, and wherein the injection element (2) is connected with a circumferential location (11) of the at least one belt (7) indirectly or directly,
**characterized in that**
the injection element (2) is arranged on a clamping or carrier plate (12) which is connected at the circumferential location (11) of the at least one belt (7).

2. Injection unit according to claim 1, **characterized in that** the belt (7) is designed as a ring-shaped closed element.

3. Injection unit according to claim 2, **characterized in that** the ring closure of the belt (7) takes place by the clamping or carrier plate (12) by fastening the ends of the belt (7) at the clamping or carrier plate (12).

4. Injection unit according to one of claims 1 to 3, **characterized in that** the injection element (2) and/or the clamping or carrier plate (12) are guided on at least one linear guide (13).

5. Injection unit according to one of claims 1 to 4, **characterized in that** at least two belts (7', 7") are provided which are arranged parallel to another.

6. Injection unit according to claim 5, **characterized in that** the two belts (7', 7") being arranged parallel to another carry the clamping or carrier plate (12) together.

7. Injection unit according to claim 5 or 6, **characterized in that** the deflexion pulleys (8', 8", 9', 9") of the at least two belts (7', 7") are arranged on common shafts and bearing journals (14, 15) respectively.

8. Injection unit according to one of claims 1 to 7, **characterized in that** the at least one belt (7) is designed as a flat belt.

9. Injection unit according to one of claims 1 to 7, **characterized in that** the at least one belt (7) is designed as a gear belt.

10. Injection unit according to one of claims 1 to 9, **characterized in that** a single driven deflexion pulley (8) per belt (7) is arranged.

11. Injection unit according to claim 10, **characterized in that** the driven deflexion pulley (8) is arranged in such a manner that the part (16) of the belt (7) between the circumferential location (11) and the driven deflexion pulley (8) is tensile-loaded during the movement of the injection element (2) in the direction of injection (E).

## Revendications

1. Unité d'injection (1) d'une machine de moulage par injection, qui comprend une unité cylindre-piston (2, 3), une quantité dosée de plastique en fusion, déposée dans une portion (4) d'un cylindre (3), étant versée par le biais d'une buse d'injection (5) dans un outil de moulage par injection par un mouvement axial d'un élément d'injection (2), en particulier d'un piston (2) ou d'une vis sans fin, dans le cylindre (3), l'élément d'injection (2) étant connecté à un élément d'entraînement (6), pouvant déplacer l'élément d'injection (2) en translation dans une direction de coulissement (L), l'élément d'entraînement (6) comprenant au moins une courroie (7), qui est guidée par le biais de deux poulies de renvoi espacées (8, 9), au moins l'une des poulies de renvoi (8) étant en liaison rotative avec au moins un moteur d'entraînement (10), en particulier un servomoteur, et l'élément d'injection (2) étant connecté directement ou indirectement à un endroit périphérique (11) de l'au moins une courroie (7),
**caractérisée en ce que**
l'élément d'injection (2) est disposé sur une plaque de serrage ou de support (12) qui est fixée à l'endroit périphérique (11) de l'au moins une courroie (7).

2. Unité d'injection selon la revendication 1, **caractérisée en ce que** la courroie (7) est réalisée sous forme d'élément annulaire fermé.

3. Unité d'injection selon la revendication 2, **caractérisée en ce que** la fermeture annulaire de la courroie (7) a lieu par le biais de la plaque de serrage ou de support (12), les extrémités de la courroie (7) étant fixées à la plaque de serrage ou de support (12).

4. Unité d'injection selon l'une quelconque des revendications 1 à 3, **caractérisée en ce que** l'élément d'injection (2) et/ou la plaque de serrage ou de support (12) sont guidés sur au moins un guidage linéaire (13).

5. Unité d'injection selon l'une quelconque des revendications 1 à 4, **caractérisée en ce qu'**au moins deux courroies (7', 7") disposées parallèlement l'une à l'autre sont prévues.

6. Unité d'injection selon la revendication 5, **caractérisée en ce que** les au moins deux courroies (7', 7") disposées parallèlement l'une à l'autre portent ensemble la plaque de serrage ou de support (12).

7. Unité d'injection selon la revendication 5 ou 6, **caractérisée en ce que** les poulies de renvoi (8', 8", 9', 9") des au moins deux courroies (7', 7") sont disposées sur des arbres ou des tourillons (14, 15) communs.

8. Unité d'injection selon l'une quelconque des revendications 1 à 7, **caractérisée en ce que** l'au moins une courroie (7) est réalisée sous forme de courroie plate.

9. Unité d'injection selon l'une quelconque des revendication 1 à 7, **caractérisée en ce que** l'au moins une courroie (7) est réalisée sous forme de courroie dentée.

10. Unité d'injection selon l'une quelconque ces revendications 1 à 9, **caractérisée en ce qu'**une poulie de renvoi entraînée (8) unique est prévue pour chaque courroie (7).

11. Unité d'injection selon la revendication 10, **caractérisée en ce que** la poulie de renvoi entraînée (8) est disposée de telle sorte que lors du déplacement de l'élément d'injection (2) dans la direction d'injection (E), la partie (16) de la courroie (7) soit sollicitée en traction entre l'endroit périphérique (11) et la poulie de renvoi entraînée (8).
